# EUROPÄISCHE PATENTSCHRIFT

(11) **EP 0 947 814 B1**
(45) Veröffentlichungstag und Bekanntmachung des Hinweises auf die Patenterteilung: **29.10.2003**
(21) Anmeldenummer: 99104584.0
(22) Anmeldetag: 08.03.1999
(51) Int. Cl.: G01L 7/08, G01L 19/00, A61M 5/168, F16J 3/02

(54) **Verfahren zur luftdichten Verbindung zweier Membranen**
Procedure for obtaining an airtight connection between two diaphragms
Procédé de connection étanche à l'air de deux membranes

(30) Priorität: 30.03.1998 DE 19814101
(43) Veröffentlichungstag der Anmeldung: 06.10.1999
(73) Patentinhaber: Fresenius Medical Care Deutschland GmbH, 61352 Bad Homburg (DE)
(72) Erfinder: Herklotz, Martin, 63486 Bruchköbel (DE)
(74) Vertreter: Laufhütte, Dieter, Dr.-Ing.

(56) Entgegenhaltungen:
- EP-A- 0 139 441
- EP-A- 0 690 232
- DE-A- 4 315 962
- US-A- 4 222 127
- US-A- 5 282 849

## Beschreibung

Die vorliegende Erfindung betrifft ein Verfahren zur luftdichten Verbindung zweier Membranen.

Die Problemstellung, zwei Membranen derart miteinander zu verbinden, daß der zwischen den Membranen verbleibende Raum möglichst klein und gegenüber dem die Membranen umgebenden Medium abgedichtet ist, ist beispielsweise aus dem Bereich der Drucksensoren bekannt. Die DE 44 19 593 A1 offenbart einen Drucksensor, der in einer Druckmeßkammer angeordnet ist, die sich an einer geeigneten Position in dem von einer Flüssigkeit oder Gas durchströmten Schlauch oder Kanal befindet. Die Druckmeßkammer weist eine Öffnung auf, in der sich eine mittels einer Spannvorrichtung glatt gespannte Membran erstreckt, die in Abhängigkeit des in dem strömenden Fluid herrschenden Druckes ausgelenkt wird. In dem von Druckschwankungen des Fluids beeinflußten Bereich der Membran ist ein Druckübertragungsteil angeordnet, das den Bewegungen der druckbeaufschlagten Membran folgt und das ebenfalls aus einer Membran besteht. Die luftdichte Verbindung beider Membranen erfolgt derart, daß diese in ihren Randbereichen verpreßt werden, wobei der zwischen den Membranen verbleibende Raum möglichst klein gehalten werden soll.

Aus der EP 0 130 441 ist eine Vorrichtung bekannt, bei der eine mit Druck beaufschlagte Membran dadurch vollständig mit einer Membran einer Druckmeßvorrichtung verbunden wird, daß die Luft zwischen beiden Membranen mittels einer Vakuumpumpe abgesaugt wird. Eine derartige Vorrichtung ermöglicht aufgrund des dichten Aufeinanderliegens beider Membranen die Messung von Über- und Unterdrucken, weist jedoch den Nachteil auf, daß stets Mittel zur Vakuumerzeugung erforderlich sind, um einen zuverlässigen Betrieb der Vorrichtung zu gewährleisten.

Es ist die Aufgabe der vorliegenden Erfindung, ein einfaches Verfahren zur luftdichten und vollständigen Verbindung zweier Membranen zur Verfügung zu stellen.

Diese Aufgabe wird erfindungsgemäß dadurch gelöst, daß das Verfahren die Schritte Erzeugung einer Wölbung einer der Membranen, Aufsetzen der konvex gewölbten Seite der Membran auf die damit luftdicht zu verbindende Membran, Zusammenführen der Membranen bis die Randbereiche der Membranen miteinander in Verbindung stehen und Aufbringen einer die Membranen im Randbereich luftdicht abschließenden Preßkraft. Durch ein derartiges Verfahren wird es möglich, die Luft zwischen beiden Membranen vollständig zu verdrängen und einen Luftzutritt zu verhindern. Dies wird dadurch erreicht, daß die konvexe Wölbung der ausgewölbten Membran beim Zusammenführen in die andere Membran eingedrückt wird, wodurch die Luft zwischen beiden Membranen entsprechend nach und nach verdrängt wird. Das Zusammenführen der Membranen wird durchgeführt, bis die Membranen schließlich auch in ihren Randbereichen aufeinanderliegen. Um die Zufuhr von Luft aus dem die Membranen umgebenden Bereich zu vermeiden, wird erfindungsgemäß nach dem Zusammenführen der Membranen eine Preßkraft aufgebracht, die bewirkt, daß die Membranen in ihrem Randbereich luftdicht abgeschlossen werden. Somit wird der Vorteil erreicht, daß zum einen eine luftdichte und zum anderen eine vollständige Verbindung der Membranen erzielt wird, was dazu führt, daß bei Unter- wie auch bei Überdrücken eine zuverlässige Verbindung und somit eine stets synchrone Bewegung der Membranen gewährleistet wird.

Durch die konvexe Wölbung einer der Membranen wird erreicht, daß, im Gegensatz zum planen Aufeinanderlegen zweier Membranen, die Möglichkeit ausgeschlossen wird, daß nach dem Zusammenführen und Verpressen der Randbereiche ein Luftpolster im Bereich zwischen den Membranen verbleibt. Erfindungsgemäß erfolgt eine Verdrängung der Luft zwischen den Membranen dadurch, daß die Verbindung beider Membranen zunächst nicht über die gesamte Querschnittsfläche, sondern zu Beginn des Zusammenführens nur in einem durch die Wölbung gebildeten vorstehenden Bereich der Membran erfolgt.

In weiterer Ausgestaltung der Erfindung ist vorgesehen, daß eine erste Membran eine erste Kammer einer Membraneinheit einer Dosierpumpe zur Aufnahme eines Arbeitsfluids und eine zweite Membran eine zweite Kammer zur Aufnahme eines zu fördernden Fluids begrenzt, und die Auswölbung der ersten Membran dadurch erzeugt wird, daß der Druck auf das Arbeitsfluid in der ersten Kammer erhöht wird. Somit wird es möglich, die Membran eines Pumpenkopfes einer Membranpumpe luftdicht und vollständig mit der die das Arbeitsfluid begrenzenden Membran der Pumpe zu verbinden. Dazu wird beispielsweise durch die Bewegung eines Kolbens der Druck des Arbeitsfluids geringfügig erhöht, wodurch sich eine konvexe Wölbung der das Arbeitsfluid begrenzenden Membran ergibt. Das Verbinden der Membran des Pumpenkopfes mit der konvex ausgewölbten ersten Membran erfolgt nach dem erfindungsgemäßen Verfahren, wonach die gewölbte Membran auf die damit zu verbindende Membran des Pumpenkopfes aufgesetzt wird, beide Membranen zusammengeführt werden bis ihre Randbereiche miteinander in Verbindung stehen und anschließend eine die Membranen im Randbereich luftdicht abschließende Preßkraft aufgebracht wird.

Besonders vorteilhaft ist es, wenn die zweite Kammer vor dem Zusammenführen beider Membranen mit einem Fluid gefüllt ist und durch das Zusammenführen teilweise oder vollständig entleert wird. Die zweite Kammer kann mit einer Flüssigkeit oder beispielsweise einem unter Druck stehenden Gas gefüllt sein, das beim Zusammenführen entsprechend der konvexen Wölbung der ersten Membran aus der zweiten Kammer gedrückt wird.

In weiterer Ausgestaltung der vorliegenden Erfindung ist vorgesehen, daß das Aufsetzen und Zusammenführen beider Kammern mit Hilfe einer Führung erfolgt. Insbesondere wird dadurch wird das exakte Aufsetzen der gewölbten Membran auf die damit luftdicht zu verbindende Membran an der gewünschten Position erleichtert. Das Zusammenführen beider Kammern mit Hilfe einer Führung stellt ferner sicher, daß die Randbereiche der Membranen exakt aufeinanderliegen, so daß sichergestellt wird, daß die luftdichte Verbindung in dem gesamten Randbereich der Membranen erfolgt.

In weiterer Ausgestaltung der vorliegenden Erfindung ist es möglich, daß die Kammern jeweils in einem Gehäuseteil angeordnet sind und nach dem Zusammenführen mittels einer an den Gehäuseteilen angeordneten Spannvorrichtung mit der gewünschten Preßkraft zusammengehalten werden. Dadurch wird sichergestellt, daß stets eine für die luftdichte Verbindung ausreichende Preßkraft auf die Randbereiche der Membranen aufgebracht wird.

Die Wölbung einer der Membranen kann während des Zusammenführens beider Membranen vergrößert werden. Somit wird die Verdrängung der Luft zwischen beiden Membranen bzw. die Vergrößerung der Kontaktfläche beider Membranen nicht nur durch das Zusammenführen, sondern auch durch die Vergrößerung der Auswölbung einer der Membranen erreicht. Soll beispielsweise eine Membran eines Membranpumpenkopfes mit der das Arbeitsfluid begrenzenden Membran der Membranpumpe verbunden werden, kann nach dem Aufsetzen der bereits ausgewölbten Membran und während des Zusammenführens beider Membranen der Druck in dem Arbeitsfluid derart erhöht werden, daß die konvexe Auswölbung der ersten Membran vergrößert wird.

In weiterer Ausgestaltung der vorliegenden Erfindung ist vorgesehen, daß die Wölbung der Membran derart ausgebildet ist, daß die damit zu verbindende Membran nach dem Zusammenführen beider Membranen weitgehend oder vollständig ausgelenkt wird. Dadurch wird besonders zuverlässig erreicht, daß die gesamte Luft zwischen beiden Membranen verdrängt wird, bevor die Randbereiche der Membranen miteinander verbunden werden. Die konvexe Wölbung der Membran kann bereits während des Aufsetzens der Membran vollständig ausgebildet sein oder auch während des Zusammenführens vergrößert werden.

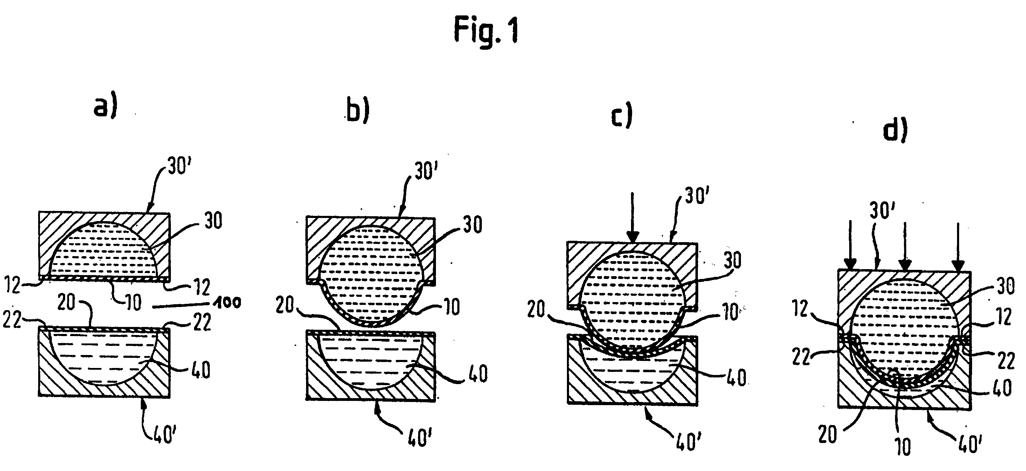

Weitere Vorteile und Einzelheiten der vorliegenden Erfindung werden anhand eines in der Zeichnung dargestellten Ausführungsbeispiels näher erläutert. Es zeigt
- Fig. 1:: Eine schematische Darstellung des erfindungsgemäßen Verfahrens zum luftdichten und vollständigen Zusammenführen zweier Membranen einer Membranpumpe.

Fig. 1a zeigt das Gehäuse 30' einer Membranpumpe, in dem die Kammer 30 angeordnet ist. Die Kammer 30 wird durch die Membran 10 begrenzt und enthält gemäß dem vorliegenden Ausführungsbeispiel ein geeignetes Arbeitsmedium der Membranpumpe, wie z.B. Öl. Fig. 1a zeigt ferner das Gehäuse 40' mit der darin angeordneten Kammer 40, die ihrerseits durch die Membran 20 begrenzt wird. Die Kammer 40 enthält ein beliebiges durch die Membranpumpe zu förderndes Medium, wie z.B. eine Dialysierflüssigkeit. Das Gehäuse 40' stellt den Membranpumpenkopf dar und weist (nicht dargestellte) Anschlüsse zur Zu- und Abfuhr des zu fördernden Mediums auf. Das Gehäuse 40' kann beispielsweise als ein bei jeder Anwendung auszutauschender Einmalartikel einer Membranpumpe eines Dialysiergerätes, insbesondere eines Peritonealdialysegerätes, ausgeführt sein.

Fig. 1a zeigt die Membranen 10, 20 in ihrem durch den Zwischenraum 100 getrennten Ausgangszustand vor Anwendung des erfindungsgemäßen Verfahrens. Die Membranen 10, 20 sind in ihren Randbereichen 12, 22 mit den Gehäuseteilen 30', 40' verbunden.

Fig. 1b stellt die Membran 10 in einem konvex gewölbten Zustand dar, der dadurch erzeugt wird, daß der Druck auf das in der Kammer 30 befindliche Arbeitsmedium erhöht wird. Dies kann beispielsweise dadurch geschehen, daß der Kolben einer mit der Membranpumpe in Verbindung stehenden Kolbeneinheit entsprechend bewegt wird.

In Fig. 1c ist der Zustand beider Membranen 10, 20 nach dem Aufsetzen der gewölbten Membran 10 auf die damit luftdicht und vollständig zu verbindende Membran 20 dargestellt. Die ausgewölbte Membran 10 wird zunächst zentrisch auf die Membran 20 aufgesetzt und anschließend werden die Gehäuseteile 30', 40' zusammengeführt. Dadurch wird die Membran 20 entsprechend konkav nach innen bewegt und die zwischen beiden Membranen 10, 20 befindliche Luft radial nach außen geführt. Somit wird erreicht, daß sich die beim Zusammenführen vergrößernde Kontaktfläche beider Membranen 10, 20 stets und zuverlässig in einem luftfreien Zustand gehalten wird.

Vor dem Aufsetzvorgang der gewölbten Membran 10 kann die damit zu verbindende Membran 20 plan ausgeführt sein oder eine geringe konvexe oder konkave Wölbung aufweisen, die jedoch geringer sein muß, als die konvexe Wölbung der Membran 10.

Fig. 1d zeigt beide Membranen 10,20, die nach dem Zusammenführen in ihrer Querschnittsfläche sowie auch in ihrem Randbereich 12, 22 miteinander in Verbindung stehen. Durch das allmähliche Zusammenführen beider Membranen 10, 20 wird erreicht, daß der Kontaktbereich zwischen den Membranen 10, 20 von Luft befreit wird. Das Zusammenführen der Randbereiche 12, 22 sowie das Aufbringen der Preßkraft bewirkt, daß ein Luftzutritt in den Raum zwischen die Membranen 10, 20 sicher vermieden wird.

Somit wird sichergestellt, daß nach dem Zusammenführen der beiden Gehäuseteile 30', 40' eine luftfreie und vollständige Verbindung beider Membranen 10, 20 erfolgt, was zur Folge hat, daß die Membran 20 des Gehäuseteils 40' sowohl bei Unter- als auch bei Überdruck der Membran 10 folgt. Dadurch wird es möglich, exakt das Volumen des zu fördernden Fluids in die Kammer 40 zu führen bzw. aus dieser zu verdrängen, das dem bewegten Volumen des in der Kammer 30 befindlichen Arbeitsfluids entspricht. Der Einfluß oder der Zutritt von Luft zwischen die Membranen 10, 20, der aufgrund der Kompressibilität zum einen die Dosiergenauigkeit der Vorrichtung verringern würde und zum anderen durch den fehlenden Unterdruck das Ansaugen von zu fördernden Medien verhindern würde, kann erfindungsgemäß zuverlässig ausgeschlossen werden.

Insbesondere ermöglicht es das erfindungsgemäße Verfahren, auf die Anwendung von Vakuumpumpen beim Verbinden der Membranen zu verzichten, was die entsprechenden Vorrichtungen bzw. das anzuwendende Verfahren vereinfacht.

## Patentansprüche

1. Verfahren zur luftdichten Verbindung zweier Membranen
**gekennzeichnet durch**
die Schritte
a) Erzeugung einer Wölbung einer der Membranen (10)
b) Aufsetzen der konvex gewölbten Seite der Membran (10) auf die damit luftdicht zu verbindende Membran (20), wobei die Verbindung beider Membranen (10, 20) zunächst nicht über die gesamte Querschnittsfläche, sondern zu Beginn des Zusammenführens nur in einem **durch** die Wölbung gebildeten vorstehenden Bereich der Membran (10) erfolgt,
c) Zusammenführen der Membranen (10, 20) bis die Randbereiche (12, 22) der Membranen (10,20) miteinander in Verbindung stehen und
d) Aufbringen einer die Membranen (10, 20) im Randbereich (12, 22) luftdicht abschließenden Presskraft.

2. Verfahren nach Anspruch 1, **dadurch gekennzeichnet, daß** eine erste Membran (10) eine erste Kammer (30) einer Membraneinheit (100) einer Dosierpumpe zur Aufnahme eines Arbeitsfluids und eine zweite Membran (20) eine zweite Kammer (40) zur Aufnahme eines zu fördernden Fluids begrenzt, und die Auswölbung der ersten Membran (10) dadurch erzeugt wird, daß der Druck auf das Arbeitsfluid in der ersten Kammer (30) erhöht wird.

3. Verfahren nach Anspruch 2, **dadurch gekennzeichnet, daß** die zweite Kammer (40) vor dem Zusammenführen beider Membranen (10,20) mit einem Fluid gefüllt ist und durch das Zusammenführen teilweise oder vollständig entleert wird.

4. Verfahren nach Anspruch 2 oder 3, **dadurch gekennzeichnet, daß** das Aufsetzen und Zusammenführen beider Kammern (30,40) mit Hilfe einer Führung erfolgt.

5. Verfahren nach einem oder mehreren der Ansprüche 2 bis 4, **dadurch gekennzeichnet, daß** die Kammern (30,40) jeweils in einem Gehäuseteil (30',40') angeordnet sind und nach dem Zusammenführen mittels einer an den Gehäuseteilen (30',40') angeordneten Spannvorrichtung mit der gewünschten Preßkraft zusammengehalten werden.

6. Verfahren nach einem oder mehreren der Ansprüche 1 bis 5, **dadurch gekennzeichnet, daß** die Wölbung einer der Membranen (10) während des Zusammenführens beider Membranen (10,20) vergrößert wird.

7. Verfahren nach einem oder mehreren der Ansprüche 1 bis 6, **dadurch gekennzeichnet, daß** die Wölbung der Membran (10) derart ausgebildet ist, daß die damit zu verbindende Membran (20) beim Zusammenführen beider Membranen (10,20) weitgehend oder vollständig ausgelenkt wird.

## Claims

1. Method of connecting two diaphragms in an air-tight manner, **characterized by** the following steps
a) producing curvature in one of the diaphragms (10),
b) positioning the convexly curved side of the diaphragm (10) on the diaphragm (20) which is to be connected in an air-tight manner thereto, the connection between the two diaphragms (10, 20) taking place in the first instance not over the entire cross-sectional surface area but, as the diaphragms are initially brought together, only in a projecting region of the diaphragm (10), this region being formed by the curvature,
c) bringing the diaphragms (10, 20) together until the edge regions (12, 22) of the diaphragms (10, 20) are connected to one another, and
d) applying a pressing force which seals the diaphragms (10, 20) in an air-tight manner in the edge region (12, 22).

2. Method according to Claim 1, **characterized in that** a first diaphragm (10) bounds a first chamber (30) of a diaphragm unit (100) of a metering pump for accommodating a working fluid and a second diaphragm (20) bounds a second chamber (40) for accommodating a fluid which is to be fed, and the curvature of the first diaphragm (10) is produced by increasing the pressure on the working fluid in the first chamber (30).

3. Method according to Claim 2, **characterized in that** the second chamber (40) is filled with a fluid prior to the two diaphragms (10, 20) being brought together and is partially or completely emptied by the two diaphragms being brought together.

4. Method according to Claim 2 or 3, **characterized in that** the two chambers (30, 40) are placed in position and brought together with the aid of a guide.

5. Method according to one or more of Claims 2 to 4, **characterized in that** the chambers (30, 40) are each arranged in a housing part (30', 40') and, once brought together, are held together by the desired pressing force by means of a clamping device arranged on the housing parts (30', 40').

6. Method according to one or more of Claims 1 to 5, **characterized in that** the curvature of one of the diaphragms (10) is increased as the two diaphragms (10, 20) are brought together.

7. Method according to one or more of Claims 1 to 6, **characterized in that** the curvature of the diaphragm (10) is such that the diaphragm (20) which is to be connected to the diaphragm (10) is largely or completely deflected as the two diaphragms (10, 20) are brought together.

## Revendications

1. Procédé de connexion étanche à l'air de deux membranes
**caractérisé par**
les étapes consistant à
a) créer une courbure d'une des membranes (10)
b) positionner la face convexe bombée de la membrane (10) sur la membrane à connecter (20) pour la rendre ainsi étanche à l'air, moyennant quoi la connexion des deux membranes (10, 20) ne s'effectue pas dans un premier temps au-dessus de la totalité de la surface de la section transversale mais uniquement au début de l'assemblage dans une zone située en avant de la membrane (10) et formée par la courbure,
c) assembler les membranes (10, 20) jusqu'aux zones de délimitation (12, 22) des membranes (10, 20) qui sont en liaison l'une avec l'autre et
d) appliquer une force de compression rendant étanche à l'air les membranes (10, 20) dans la zone de délimitation (12, 22).

2. Procédé selon la revendication 1, **caractérisé en ce qu'**une première membrane (10) limite une première chambre (30) d'une unité à membrane (100) d'une pompe de dosage afin d'y recevoir un fluide de travail et qu'une deuxième membrane (20) limite une deuxième chambre (40) afin d'y recevoir un fluide à transporter et que la courbure de la première membrane (10) est ainsi générée de telle sorte qu'il y a un accroissement de la pression s'exerçant sur le fluide de travail dans la première chambre (30).

3. Procédé selon la revendication 2, **caractérisé en ce que** la deuxième chambre (40), avant l'assemblage des deux membranes (10, 20) est remplie d'un fluide et qu'en raison de l'assemblage, elle est vidée partiellement ou totalement.

4. Procédé selon la revendication 2 ou 3, **caractérisé en ce que** le positionnement et l'assemblage des deux chambres (30, 40) s'effectuent avec l'aide d'un guide.

5. Procédé selon l'une ou plusieurs des revendications 2 à 4, **caractérisé en ce que** les chambres (30, 40) sont chacune positionnées dans une partie de boîtier (30', 40') et qu'après l'assemblage, elles sont maintenues l'une contre l'autre avec la force de compression souhaitée, au moyen d'un dispositif de tension adapté aux parties du boîtier (30', 40').

6. Procédé selon l'une ou plusieurs des revendications 1 à 5, **caractérisé en ce que** la courbure d'une des membranes (10) s'agrandira durant l'assemblage des deux membranes (10, 20).

7. Procédé selon l'une ou plusieurs des revendications 1 à 6, **caractérisé en ce que** la courbure de la membrane (10) est formée de telle sorte que la membrane à connecter (20) sera largement ou totalement étirée lors de l'assemblage des deux membranes (10, 20).
